# FASCICULE DE BREVET EUROPEEN

(11) **EP 3 074 671 B1**
(45) Date de publication et mention de la délivrance du brevet: **28.03.2018**
(21) Numéro de dépôt: 14808573.1
(22) Date de dépôt: 28.11.2014
(51) Int. Cl.: F16K 5/02, F16K 5/04, F16K 5/06, F16K 5/16

(54) **ROBINET D'ISOLEMENT A CHAMBRE MORTE**
ABSPERRVENTIL MIT EINER VAKUUMKAMMER
ISOLATION VALVE HAVING A VACUUM CHAMBER

(30) Priorité: 29.11.2013 FR 1361824
(43) Date de publication de la demande: 05.10.2016
(73) Titulaire: Total Marketing Services, 92800 Puteaux (FR)
(72) Inventeur: SUCHER, Xavier, 78580 Bazemont (FR)
(74) Mandataire: Hirsch & Associés
(86) Numéro de dépôt international: PCT/EP2014/075992
(87) Numéro de publication internationale: WO 2015/079034

(56) Documents cités:
- EP-A1- 2 119 946
- EP-A1- 2 423 549
- FR-A1- 2 432 661
- FR-A1- 2 981 720
- GB-A- 337 339
- GB-A- 1 346 357
- GB-A- 2 226 385
- JP-A- H08 219 298
- JP-A- 2002 081 553
- US-A- 2 872 155

## Description

La présente invention se rapporte à un robinet d'isolement à chambre morte.

Dans le domaine pétrolier, il est connu de mettre en oeuvre des robinets d'isolement à chambre morte sur les tuyauteries véhiculant les hydrocarbures, par exemple. De tels robinets permettent en effet d'isoler un tronçon d'un pipeline de manière étanche, permettant ainsi de stopper l'alimentation d'un feu, d'éviter une fuite d'hydrocarbures, d'assurer la maintenance sur le pipeline ou de parfaitement ségréguer différents produits en évitant toute contamination croisée.

Ce type de robinet d'isolement est particulièrement intéressant du fait qu'il assure une double étanchéité :
- entre la zone amont et la chambre morte, d'une part ; et
- entre la chambre morte et la zone aval, d'autre part.

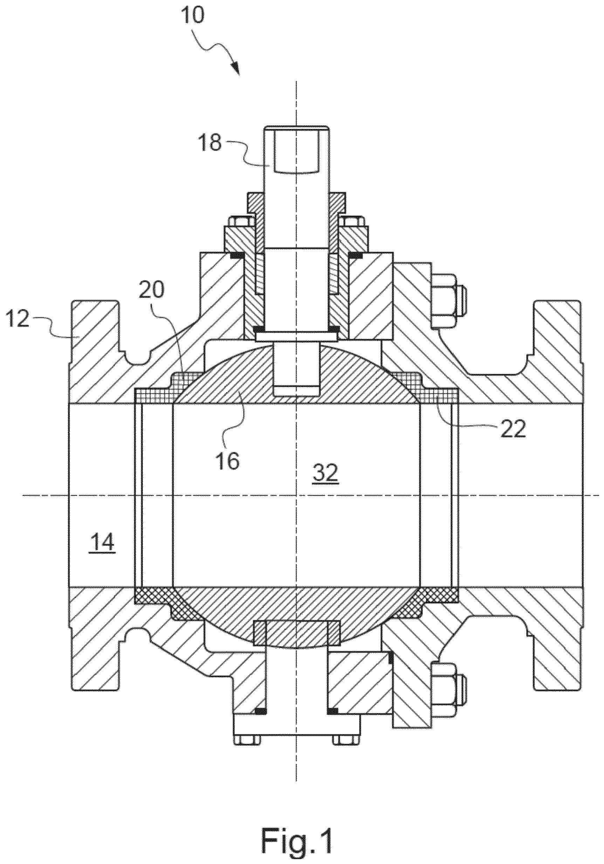

Un exemple de robinet d'isolement à chambre morte est représenté sur la figure 1. En l'espèce, le robinet d'isolement 10 représenté est du type à tournant sphérique. Un tel robinet d'isolement comprend classiquement un corps 12 avec un conduit de passage de fluide 14, un tournant sphérique 16, et une tige 18 d'actionnement du tournant sphérique 16, permettant d'actionner le tournant sphérique 16 entre une position de passage du fluide au travers du conduit 14 (position représentée sur la figure) et une position d'obturation du conduit 14. L'actionnement du tournant sphérique 16 consiste ici en une rotation d'un quart de tour du tournant sphérique 16 autour de l'axe de la tige 18.

Le robinet d'isolement 10 de la figure 1 comprend également des sièges amont 20 et aval 22 en appui étanche contre le tournant sphérique 16 autour du conduit de passage de fluide 14, d'une part, et contre le corps 12, d'autre part.

Il est connu que dans un tel robinet d'isolement 10, le tournant présente une cavité 32 qui forme, en position d'obturation du conduit de passage de fluide, ensemble avec le corps 12, une chambre morte. Cette chambre morte contient du fluide - de l'hydrocarbure dans l'application évoquée ci-avant - emprisonné dans la cavité 32, au moment du passage du tournant sphérique 16 de sa position de passage de fluide à sa position d'obturation du conduit de passage de fluide 14.

Or, ce type de robinet peut être exposé à des variations de température. Une augmentation de la température génère une expansion du liquide emprisonné dans la chambre morte, qui, du fait de l'incompressibilité de celui-ci, génère une montée en pression dans la chambre morte. Cette montée en pression peut, dans les cas extrêmes, conduire à un éclatement du robinet d'isolement. Par exemple, l'expansion d'un hydrocarbure est de l'ordre de 0,1 % du volume par degré Celsius ce qui, en négligeant l'expansion du corps du robinet d'isolement due à sa dilation thermique et due à la montée en pression et en considérant une étanchéité parfaite, conduit à une augmentation de pression de l'ordre de 10 bar/°C.

Pour réduire la pression dans la chambre morte, il est connu de concevoir ce type de robinet d'isolement avec un dispositif permettant de décomprimer la chambre morte. Ce dispositif peut consister en des sièges adaptés à s'écarter du tournant en cas de surpression dans la chambre morte. Cependant, de tels sièges nuisent à l'étanchéité du robinet d'isolement. En variante, le dispositif de décompression peut être disposé à l'extérieur du corps et être relié à la chambre morte par un conduit traversant le corps.

Cependant, pour des raisons de sécurité, le robinet d'isolement doit lorsqu'il est soumis à un incendie :
- ne pas fuir en ligne vers la zone aval, pour assurer l'isolement ;
- ne pas fuir vers l'extérieur du robinet d'isolement, pour éviter l'alimentation de l'incendie dans lequel se trouve le robinet ; et
- permettre de maitriser l'augmentation de pression à l'intérieur du robinet d'isolement et notamment à l'intérieur de la chambre morte pour éviter la ruine du robinet d'isolement.

Il s'avère que la mise en oeuvre d'un dispositif de décompression à l'extérieur du corps crée une vulnérabilité du robinet d'isolement, notamment en cas d'incendie car celui-ci est alors exposé aux flammes et aux hautes températures. Une telle solution ne permet donc pas d'assurer les critères de résistance au feu évoqués ci-dessus.

Il existe donc un besoin pour un robinet d'isolement à chambre morte présentant une résistance au feu accrue.

De plus, le document FR-A-432 661 concerne un dispositif distributeur hydraulique comprenant robinet à boisseau sphérique. Le document EP-A-2 423 549 concerne un dispositif de décharge de sécurité pour vanne deux voies. Le document GB-A-2 226 385 concerne une vanne à tournant sphérique.

Par ailleurs, le document GB-A-1 346 357 concerne une vanne à corps tournant sphérique comprenant, dans une paroi du corps tournant sphérique, un passage de circulation de fluide obstrué par un dispositif de décharge de la pression. Le dispositif de décharge de pression comprend un élément plaqué directement contre la paroi du corps tournant au moyen d'un ressort lui-même en appui contre un bouchon vissé dans le passage du corps tournant sphérique. Le dispositif de décharge de la pression est adapté, sous l'effet d'une augmentation de pression à l'intérieur du corps tournant sphérique, à faire se déplacer l'élément pour libérer le passage formé dans la paroi du corps tournant. La vanne à corps tournant sphérique du document GB-A-1 346 357 présente le désavantage d'empêcher tout réglage du dispositif de décharge préalablement à son montage sur la vanne à corps tournant sphérique de sorte que le montage du dispositif de décharge de la pression dans le passage du corps tournant sphérique interfère sur le réglage du ressort. De plus, la configuration du corps tournant sphérique ne permet qu'un passage limité de fluide à travers le passage entrainant, d'une part, des pertes de charge importantes et, d'autre part, un risque de défaillance en cas d'une importante augmentation de la pression, par exemple lors d'un fort apport thermique.

À cette fin, la présente invention propose un robinet d'isolement à chambre morte, selon la revendication 1. L'invention se rapporte également à une installation de transport d'hydrocarbures selon la revendication 7. D'autres caractéristiques et avantages de l'invention apparaîtront à la lecture de la description qui suit de modes de réalisation préférés de l'invention, donnée à titre d'exemple et en référence aux dessins annexés.
La figure 1 représente schématiquement en coupe un exemple de robinet d'isolement à tournant sphérique, qui n'appartient pas à l'invention, en position de passage de fluide.
La figure 2 représente schématiquement en coupe un exemple de robinet d'isolement à tournant conique, qui n'appartient pas à l'invention, en position d'obturation.
La figure 3 représente schématiquement en coupe un deuxième exemple de robinet d'isolement à tournant conique, qui n'appartient pas à l'invention, en position d'obturation.
La figure 4 représente schématiquement en coupe un deuxième exemple de robinet d'isolement qui n'appartient pas à l'invention, en position d'obturation.
La figure 5 représente schématiquement en coupe un troisième exemple de robinet d'isolement à qui n'appartient pas à l'invention, en position d'obturation.
La figure 6 représente schématiquement en coupe un exemple de robinet d'isolement à double tournant sphérique, selon l'invention, en position d'obturation.
La figure 7 représente schématiquement en coupe un exemple de robinet d'isolement à tournant qui n'appartient pas à l'invention, en position d'obturation.
La figure 8 représente schématiquement en coupe un exemple de robinet d'isolement à qui n'appartient pas à l'invention, en position d'obturation.

Il est proposé un robinet d'isolement à chambre morte, comprenant un corps, un conduit de passage de fluide dans le corps et un dispositif d'obturation actionnable entre une position d'obturation du conduit de passage de fluide et une position de passage. Le dispositif d'obturation forme, en position d'obturation, une chambre morte. Le dispositif d'obturation présente un trou, notamment entre la chambre morte, dans sa position d'obturation, et le conduit de passage de fluide. À l'intérieur de ce trou est disposé un dispositif de décompression qui permet d'éviter que la pression dans la chambre morte ne dépasse une valeur seuil, critique pour l'intégrité du robinet d'isolement. Ce dispositif de décompression peut notamment prendre la forme d'une douille avec une bille précontrainte contre un orifice de la douille au moyen d'un ressort taré. D'autres formes du dispositif de décompression sont possibles, notamment un dispositif à double bille et ressort - c'est-à-dire en fait deux billes montées l'une à la suite de l'autre dans la douille, chacune étant précontrainte par un ressort contre un orifice respectif. Un tel dispositif à double bille et ressort permet d'assurer une étanchéité améliorée.

La solution proposée assure une meilleure résistance du robinet d'isolement en cas d'incendie que les solutions connues à dispositif de décompression disposé à l'extérieur du corps du robinet d'isolement.

Avantageusement une telle solution peut être mise en oeuvre dans de nombreux types de robinets d'isolement, notamment à tournant comme les robinets double isolement et purge (de l'anglais *double block and bleed,* ci-après DBB), les robinets DBB à boisseau conique (*DBB plug valve*), les robinets DBB à boisseaux sphériques (*DBB double ball valve*), les robinets à boisseau sphérique (soit à sphère arbrée - *trunnion ball valve -* soit à sphère flottante - *floating ball valve*), les robinet à boisseau conique (*tapered plug valve*) ou les robinets à boisseau cylindrique (*cylindrical plug valve*).

La solution proposée peut également être mise en oeuvre dans les robinets à double papillon.

Dans la suite de la description, les éléments identiques ou de fonction identique portent le même signe de référence. À fin de concision de la présente description, les éléments identiques aux différents exemples ne sont pas décrits en regard de chacun de ces exemples. En d'autres termes, seules les différences entre les différents exemples sont décrites de manière détaillée, les éléments communs étant décrits en regard d'un seul exemple.

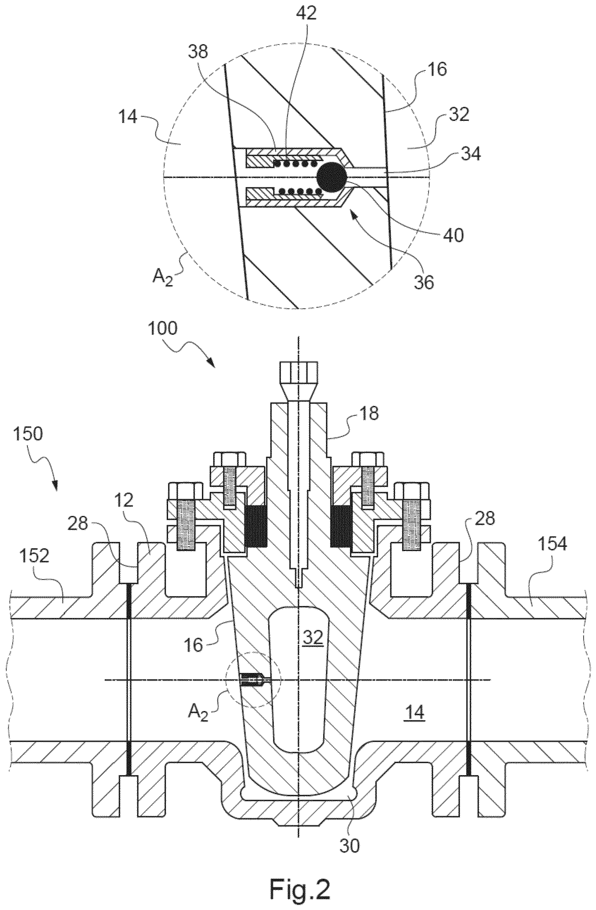

La figure 2 illustre un premier exemple de robinet à tournant 100, du type à boisseau conique. En d'autres termes, le tournant du robinet à tournant 100 est un boisseau conique 16. Ici, le robinet d'isolement est représenté mis en oeuvre dans une installation de transport d'hydrocarbures 150. Le robinet d'isolement 100 relie deux tuyaux 152, 154 et permet de contrôler, notamment d'interrompre, la communication de fluide entre les deux tuyaux 152, 154.

Tel qu'illustré, le robinet d'isolement à tournant 100 comprend un corps 12 à l'intérieur duquel est formé un conduit de passage de fluide 14. Le corps 12 forme ici au niveau des deux extrémités opposées du conduit de passage de fluide 14 des brides 28 destinées à permettre la fixation du robinet d'isolement à tournant 100 sur des conduits de transport de fluide.

Le corps forme également un siège 30 adapté à recevoir la plus petite extrémité du boisseau conique 16.

À l'intérieur de ce boisseau conique 16 est formée une cavité 32. Cette cavité 32 permet le passage de fluide à travers le boisseau conique 16 quand celui-ci est dans sa position passante. Cependant, comme illustrée sur la figure 2, cette cavité 32 forme une chambre morte quand le boisseau conique 16 est dans sa position d'obturation du passage de fluide. Ainsi, dans cette position, du fluide peut être emprisonné dans la chambre morte, quand le boisseau conique 16 est dans sa position d'obturation du passage de fluide.

Par ailleurs, le boisseau conique 16 forme ici une tige 18 adaptée à être reliée à une poignée ou un actionneur pour manoeuvrer le boisseau conique 16 entre ses positions d'obturation du passage de fluide et de passage de fluide. Ces positions correspondent à deux positions angulairement écartées d'un quart de tour, du boisseau conique 16.

Ici, de manière remarquable, la paroi du boisseau conique 16 présente un trou traversant 34 entre la cavité 32 et le conduit de passage de fluide 14. À l'intérieur de ce trou traversant 34 est ménagé un dispositif de décompression 36 de la pression dans la chambre morte. Le dispositif de décompression est ici réalisé sous la forme d'un clapet 36 comprenant une douille 38 percée aux deux extrémités, l'une des extrémités étant obturée par une bille 40 contrainte par un ressort 42. Le clapet peut être vissé ou chevillé dans le trou traversant 34 ou inséré par tout autre moyen assurant le maintien en position de ce clapet dans le trou traversant 34.

L'ouverture et la fermeture d'un tel robinet d'isolement à tournant conique est classique. Cependant, en position d'obturation du passage de fluide du boisseau conique 16, la cavité 32 forme une chambre morte comprenant du fluide.

Comme expliqué dans l'introduction, en cas d'augmentation de la température dans ou autour du robinet d'isolement 100, la pression dans la chambre morte augmente. Cependant, ici, au lieu que cette augmentation de la pression ne provoque la détérioration du robinet d'isolement 100 et notamment du corps 12, cette augmentation de pression va ouvrir le clapet 36 quand la pression va dépasser une valeur de seuil correspondant à une force exercée sur la bille 38, égale à la force du ressort 42. La pression dans la chambre morte va ainsi être régulée, ne pouvant dépasser cette valeur de seuil. La détérioration du corps du robinet d'isolement est ainsi évitée.

En outre, il est à noter que le trou traversant peut être réalisé sur la face amont du boisseau conique 16, c'est-à-dire sur la face orientée vers l'amont du robinet d'isolement, dans la position d'obturation du boisseau conique 16. Ainsi, la présence de trou traversant 16 n'empêche pas l'isolement de la zone amont par rapport à la zone aval du boisseau conique, qui est une des priorités en cas d'incendie. En d'autres termes, l'étanchéité de la zone aval, qui est une priorité, est ainsi assurée.

Enfin, l'absence d'ouverture du corps 12 vers l'extérieur assure une meilleure résistance du robinet d'isolement 10 par rapport aux robinets d'isolement connus qui présentent un dispositif de décompression à l'extérieur du corps 12.

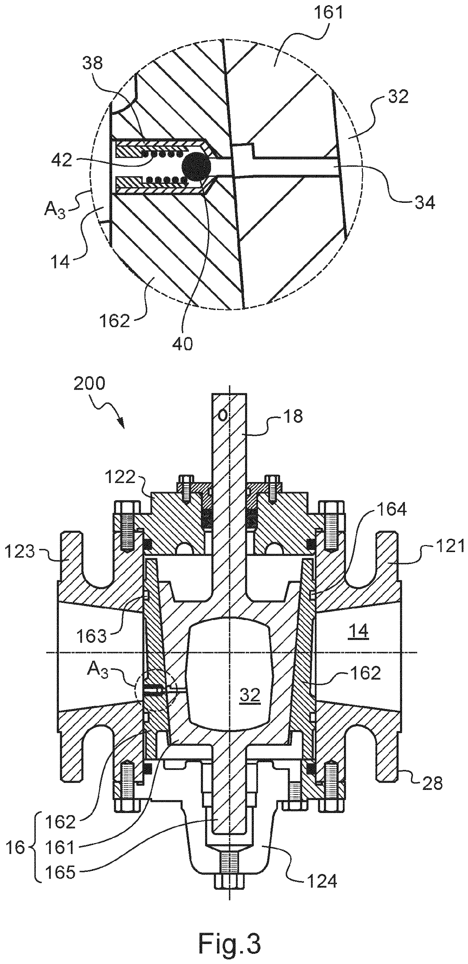

Le robinet d'isolement à tournant 200 de la figure 3 est un robinet du type DBB à boisseau conique.

Le corps du robinet d'isolement 200 est réalisé par plusieurs pièces distinctes 121, 122, 123, 124 vissées ensemble. Cette façon de procéder permet en effet une plus grande facilité de réalisation du corps. Il est à noter que cette façon de procéder n'est nullement limitée au robinet d'isolement 200 mais peut bien au contraire être mis en oeuvre pour tous les autres exemples de robinets d'isolement décrit ici.

Par rapport au robinet d'isolement 100, le robinet d'isolement 200 se distingue essentiellement du fait que le tournant 16 est réalisé ici par un boisseau conique 161 sur lequel sont montés deux coulisseaux 162 libres en translation selon l'axe de la tige 18 du boisseau conique 161. En position d'obturation du conduit de passage de fluide 14 (cf. figure 3), les coulisseaux 162 sont plaqués contre le corps par le boisseau conique 161. Des joints (non représentés) disposés dans des rainures 163, 164 assurent l'étanchéité de cette position d'obturation.

En outre, le boisseau conique 161 forme, au niveau de son extrémité opposée à la tige 18, un arbre 165 destiné à être reçu dans le corps du robinet d'isolement 200 afin de guider le mouvement de ce boisseau conique 161 par rapport au corps.

De manière connue dans ce type de robinet d'isolement, le tournant 16 et le corps 12 sont adaptés pour que :
- depuis la position d'obturation, la commande de la tige de commande provoque :
   ∘ tout d'abord un déplacement du boisseau conique 161 dans le sens de sa plus petite extrémité vers sa plus grande extrémité, ce qui provoque un dégagement des deux coulisseaux 162 par rapport au corps 12, permettant notamment de créer un jeu entre les joints et le corps 12. Ceci est notamment dû au fait que le mouvement de translation des coulisseaux 162 dans la direction de l'axe du boisseau conique 161 est limité voire empêché par le corps 12 lui-même ;
   ∘ puis la rotation du boisseau conique ensemble avec les coulisseaux 162, pour permettre le passage de fluide à travers le robinet d'isolement 200, la cavité 32 dans le boisseau conique 161 étant en communication de fluide avec le passage de fluide 14 ; et
- depuis la position de passage de fluide, la rotation de la tige de commande provoque le mouvement inverse de rotation du boisseau conique ensemble avec les coulisseaux 162, puis d'écartement des coulisseaux 162 qui viennent en contact sur le corps.

Pour ce faire, la tige de commande 18 peut par exemple être actionnée via un mécanisme non représenté et connu de l'homme de l'art, commandant une rotation de 90° transposée successivement à l'aide d'une came en un mouvement de translation puis de rotation de la tige 18.

Dans le cas du robinet d'isolement 200, il est à noter que le trou 34 est réalisé à travers un coulisseau 162 et le boisseau conique 161, de sorte à former un trou continu en position d'obturation du passage du fluide. Cependant, le fonctionnement du clapet de décompression 36 est identique au fonctionnement décrit ci-avant en regard de la figure 2.

L'utilisation d'un boisseau conique 161 dans le robinet d'isolement à tournant 200 permet au début de la phase d'ouverture de pouvoir décoller les coulisseaux 162 des parois du corps du robinet par un mouvement linéaire du boisseau conique, évitant ainsi tout frottement entre les joints disposés à l'intérieur des rainures 163 et 164 et le corps du robinet 121 et 123. De manière inversée, lors de la phase d'obturation du conduit de passage de fluide 14, le mouvement linéaire du boisseau conique suit la rotation de ce dernier permettant ainsi d'éviter les frottements entre les joints disposés à l'intérieur des rainures 163 et 164 et le corps du robinet 121 et 123.

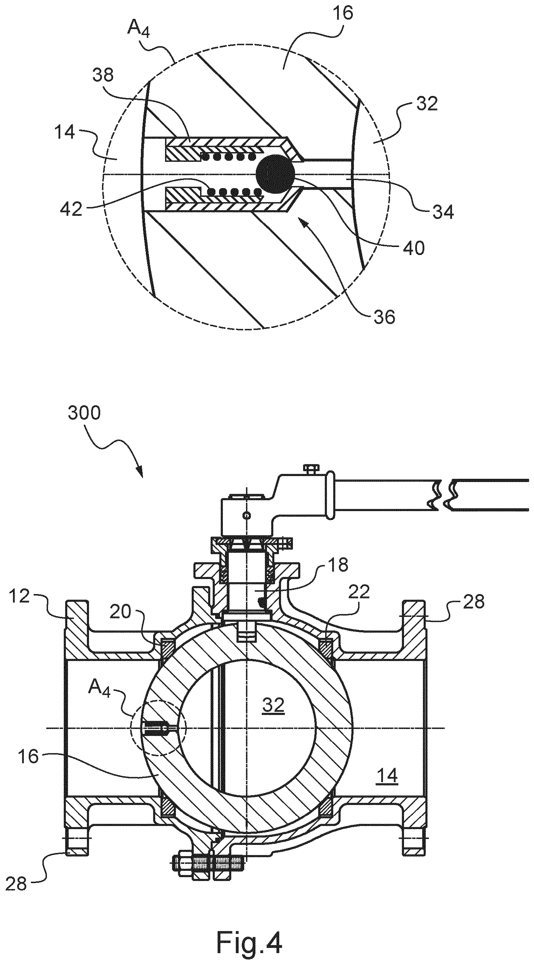

Le robinet d'isolement 300 de la figure 4 est du type à sphère flottante (de l'anglais *floating ball*)*.* Le robinet d'isolement présente ainsi un tournant sphérique 16 solidaire d'une unique tige 18 de commande de la rotation du tournant sphérique 16. En particulier, le robinet d'isolement ne présente pas d'arbre sur son extrémité opposée à la tige de commande 18, destiné à guider le mouvement du boisseau sphérique 16 dans le corps 12.

Ici, deux sièges 20, 22 sont mis en oeuvre entre le boisseau sphérique 16 et le corps 12, ceci afin d'assurer l'étanchéité du robinet d'isolement 300, notamment en position d'obturation du passage de fluide. Les sièges 20, 22 peuvent être du type à simple effet piston (de l'anglais *single piston effect*) ou SPE (c'est-à-dire que les sièges sont conçus pour se décoller du tournant en cas de surpression dans la chambre morte) ou du type à double effet piston (de l'anglais *double piston effect*) ou DPE (c'est-à-dire que les sièges sont conçus pour ne pas se décoller du tournant en cas de surpression dans la chambre morte). De préférence, l'un des deux sièges au moins est du type DPE pour assurer l'isolation des zones amont et aval. Cependant, du fait de la présence du clapet de décompression 36, il peut être envisagé de mettre en oeuvre deux sièges DPE. En effet, le maintien de la pression dans la chambre morte à un niveau acceptable pour le tournant est assuré du fait de la présence du clapet de décompression 36.

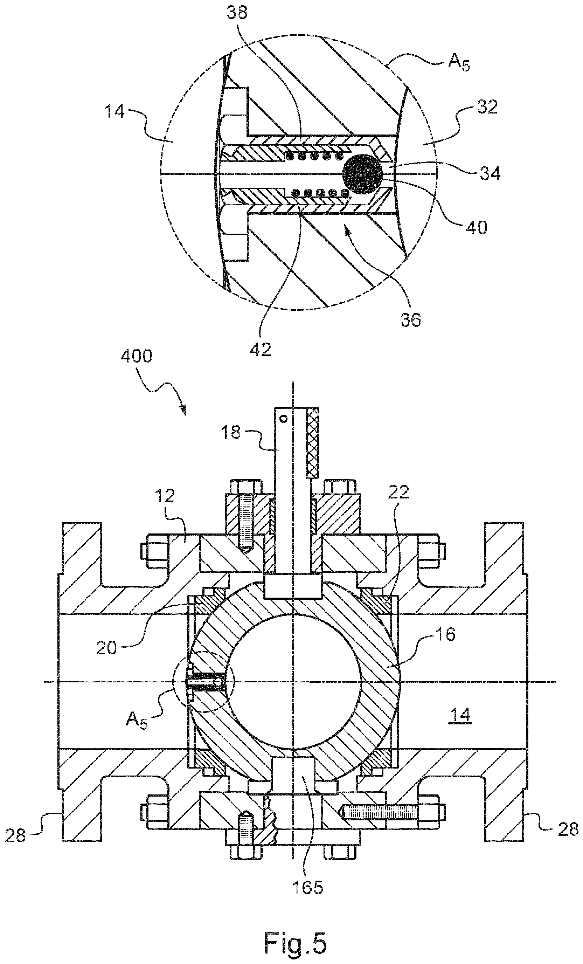

Le robinet d'isolement 400 de la figure 5 est du type à boisseau sphérique arbré (*trunnion ball valve*). Ce robinet d'isolement se distingue du robinet d'isolement 300 de la figure 4 essentiellement par la présence d'un arbre 165 qui permet de guider de manière plus précise le mouvement du boisseau sphérique 16 dans le corps 12 et de maintenir le boisseau du fait des effets de pression du fluide sur celui-ci. En outre, le clapet de décompression 36 est ici représenté vissé à l'intérieur du trou 34.

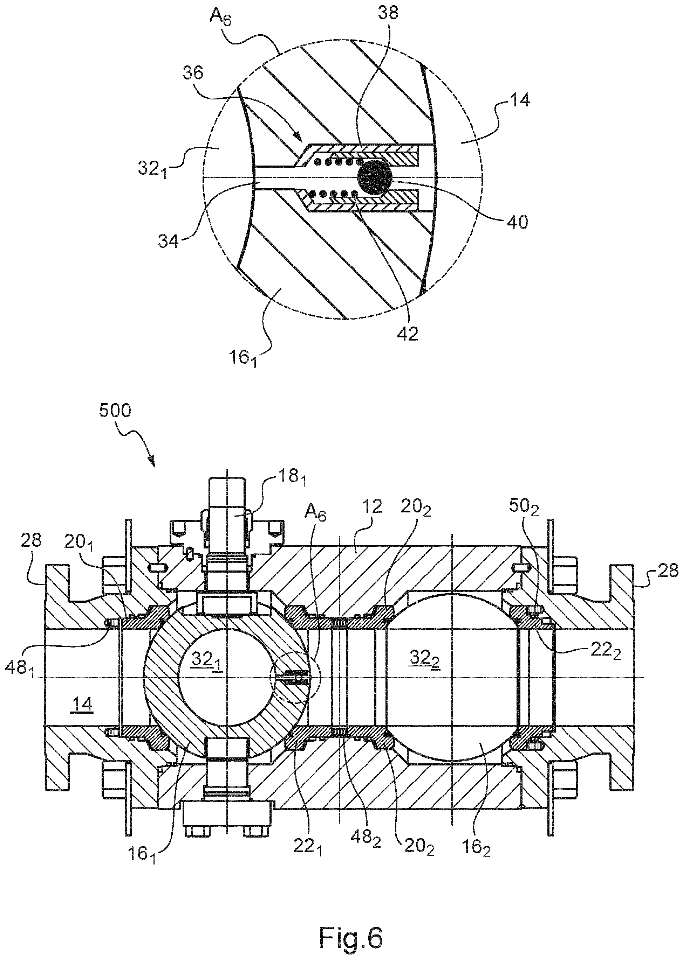

Le robinet d'isolement 500 de la figure 6 est du type robinet DBB à boisseaux sphériques (*double block and bleed ball valve*). Un tel robinet d'isolement est par exemple décrit dans la demande FR-A-2 981 720 au nom du demandeur.

Le robinet d'isolement 500 présente deux tournants 16₁, 16₂ formés par deux boisseaux sphériques arbrés. En variante, les boisseaux sphériques peuvent être du type flottant. Les axes de rotation des deux boisseaux sphériques 16₁, 16₂ peuvent par exemple être décalés angulairement d'un quart de tour.

Les deux boisseaux sphériques 16₁, 16₂ sont associés à des sièges amont 20₁, 20₂ et aval 22₁, 22₂, respectivement. Les sièges sont du type SPE ou DPE. De préférence, les premiers sièges amont et aval 20₁, 22₁ et le second siège amont 20₂ sont du type SPE, le second siège aval 22₂ étant du type DPE. Le second siège aval 22₂ est du type DPE pour éviter toute fuite de fluide vers l'aval du robinet d'isolement. En outre, les sièges sont ici associés à des ressorts 48₁, 48₂, 50₂ permettant d'assurer la position des sièges contre les boisseaux sphériques, même en cas d'usure de ces sièges.

En outre, un clapet de décompression 36 est disposé dans un trou 34 formé dans la paroi du premier boisseau sphérique 16₁, orientée vers le deuxième boisseau sphérique 16₂, en position d'obturation du passage de fluide. Il est à noter ici que le clapet de décompression 36 est ménagé de manière à s'ouvrir en cas de surpression dans la portion du conduit entre les deux boisseaux sphériques 16₁, 16₂ pour mettre en communication de fluide cette portion du conduit entre les deux boisseaux sphériques 16₁, 16₂ avec la cavité 32₁ dans le premier boisseau sphérique 16₁.

Un tel robinet d'isolement présente de manière connu trois chambres mortes en position d'obturation :
- une première chambre morte dans le premier boisseau sphérique 16₁ ;
- une deuxième chambre morte dans le deuxième boisseau sphérique 16₂ ; et
- une troisième chambre morte formée par la portion du conduit de passage de fluide 14 situé entre les deux boisseaux sphériques 16₁, 16₂.

En cas d'élévation de température dans la première chambre morte, la surpression dans cette première chambre morte est limitée du fait de la mise en oeuvre d'un siège amont 20₁ du type SPE. En effet, ce type de siège est adapté à se décoller pour permettre le passage de fluide en cas de surpression dans la cavité dans le premier boisseau sphérique. La décompression de cette première chambre morte se fait ainsi dans la portion amont du conduit de passage de fluide 14.

De même, en cas d'élévation de température dans la deuxième chambre morte, la surpression dans cette deuxième chambre morte est limitée du fait de la mise en oeuvre d'un siège amont 20₂ du type SPE. La décompression de la deuxième chambre morte se fait ainsi dans la troisième chambre morte.

Enfin, en cas d'augmentation de la température dans la troisième chambre morte ou en cas d'augmentation de la pression dans cette troisième chambre morte du fait de la décompression de la deuxième chambre morte, l'augmentation de la pression dans la troisième chambre morte est limitée du fait du clapet 36 qui permet la décompression de la troisième chambre morte dans la première chambre morte.

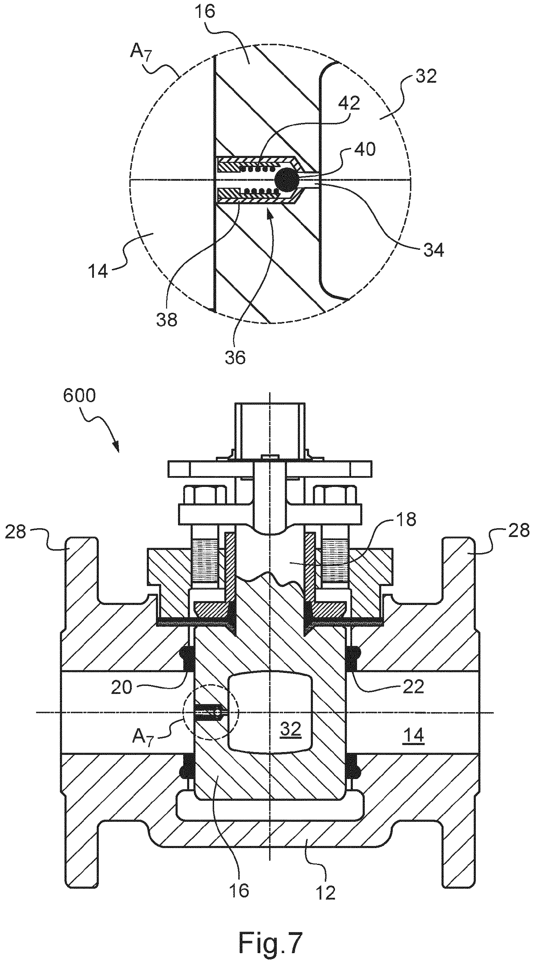

Le robinet d'isolement 600 de la figure 7 est du type robinet à boisseau cylindrique (*cylindrical plug valve*). Dans le cas de ce robinet d'isolement, le tournant est réalisé par un boisseau cylindrique 16.

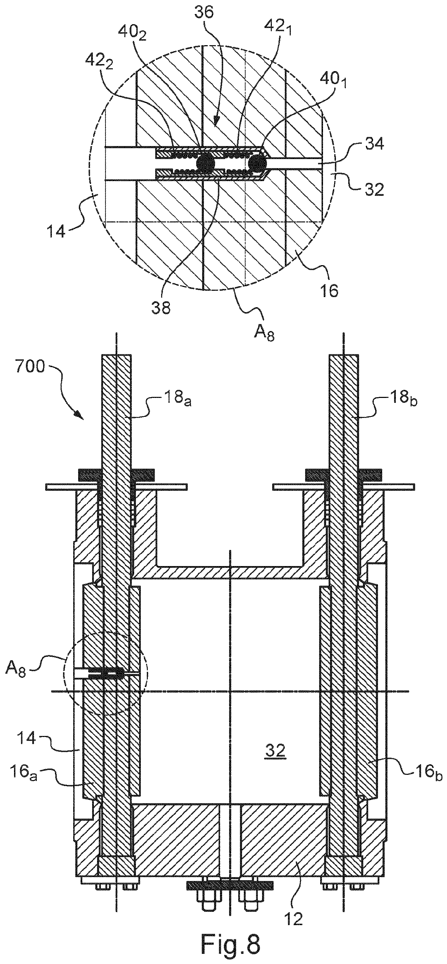

La figure 8 illustre un robinet d'isolement 700 du type à double papillon. Dans le cas de ce robinet d'isolement 700, le corps 12 forme un conduit de passage de fluide 14. Le robinet d'isolement 700 comprend un dispositif d'obturation du conduit de passage de fluide 14 comprenant deux papillons 16a, 16b disposés en aval l'un de l'autre dans le conduit de passage de fluide 14. Les deux papillons 16a, 16b prennent ici la forme de disques dont la section correspond sensiblement à la section du conduit de passage 14. Les deux papillons 16a, 16b sont manoeuvrables indépendamment l'un de l'autre, la distance entre les deux papillons étant au moins égale au diamètre des papillons 16a, 16b. La cavité 32 forme une chambre morte en position d'obturation des deux papillons 16a, 16b. Par conséquent, pour éviter une montée en pression trop importante dans cette chambre morte, le papillon amont 16a est muni d'un trou 34 à l'intérieur duquel est disposé un clapet de décompression 36.

Ici, le clapet de décompression 36 comporte deux billes contraintes chacune par un ressort contre un orifice respectif. Un tel clapet de décompression 36 permet d'améliorer l'étanchéité vers la zone aval.

Bien entendu, la présente invention n'est pas limitée aux modes de réalisation décrits ci-dessus, mais elle est susceptible de nombreuses variantes accessibles à l'homme de l'art.

Ainsi, en particulier, la forme du clapet de décompression peut différer des exemples décrits. En particulier, tous les clapets décrits peuvent être mis en oeuvre dans tous les robinets d'isolement décrits. En outre, la bille peut notamment être remplacée par tout dispositif permettant d'obturer un orifice de ou dans la douille. Les moyens de contraintes peuvent également prendre d'autres formes que celle d'un ressort hélicoïdale, comme par exemple une lame ressort. Afin de donner un ordre de grandeur, le diamètre de la bille peut par exemple être compris entre 4 mm et 1 cm.

## Revendications

1. Robinet d'isolement à chambre morte, comportant :
- un corps (12) avec un conduit de passage de fluide (14),
- un dispositif d'obturation (16₁ ; 16₂) du passage de fluide dans le conduit (14), actionnable entre une position de passage du fluide et une position d'obturation du passage de fluide dans le conduit (14), position d'obturation dans laquelle le dispositif d'obturation (16₁ ; 16₂) forme une chambre morte, une paroi du dispositif d'obturation (16₁ ; 16₂) comprenant un trou traversant (34),
dans lequel le dispositif d'obturation (16₁ ; 16₂) comporte un premier boisseau tournant sphérique (16₁) définissant une première chambre morte, et un deuxième tournant à boisseau sphérique (16₂), du type flottant ou arbré, actionnable entre une position d'obturation du passage de fluide dans le conduit (14) et une position de passage de fluide dans le conduit (14), le deuxième tournant à boisseau sphérique (16₂) définissant une deuxième chambre morte en position d'obturation du passage de fluide dans le conduit (14), une troisième chambre morte étant définie entre les deux tournants à boisseaux sphériques (16₁ ; 16₂),
**caractérisé en ce qu'**un dispositif de décompression (36) est disposé dans le trou traversant du dispositif d'obturation , et **en ce que**,
le dispositif de décompression (36) est disposé dans la paroi du premier tournant à boisseau sphérique (16₁) pour permettre la décompression de la troisième chambre morte dans la première chambre morte.

2. Robinet d'isolement à chambre morte selon la revendication 1, dans lequel le dispositif de décompression est formé par un clapet taré (36).

3. Robinet d'isolement à chambre morte selon la revendication 2, dans lequel le clapet taré (36) est vissé, chevillé ou inséré en force dans la paroi du dispositif d'obturation (16₁ ; 16₂).

4. Robinet d'isolement à chambre morte selon l'une des revendications 1 à 3, dans lequel le trou traversant (34) est réalisé entre la première chambre morte et la troisième chambre morte.

5. Robinet d'isolement à chambre morte selon la revendication 4, dans lequel le trou traversant (34) est réalisé dans la paroi du dispositif d'obturation (16₁ ; 16₂) destinée à être disposée vers le deuxième tournant à boisseau sphérique (16₂), en position d'obturation du passage de fluide dans le conduit (14).

6. Robinet d'isolement à chambre morte selon l'une des revendications précédentes, dans lequel les deux tournants à boisseaux sphériques (16₁ ; 16₂) sont associés à des sièges amont du type à simple effet piston, le premier tournant à boisseau sphérique (16₁) étant associé à un siège aval du type à simple effet piston et le deuxième tournant à boisseau sphérique (16₂) étant associé à un siège aval du type à double effet piston.

7. Installation de transport d'hydrocarbures (150) comportant au moins deux tuyaux (152 ; 154) reliés par un robinet d'isolement à chambre morte selon l'une quelconque des revendications précédentes.

## Patentansprüche

1. Absperrventil mit einem toten Raum, umfassend:
- einen Körper (12) mit einer Flüssigkeitsdurchlassleitung (14),
- eine Absperrvorrichtung (16₁; 16₂) des Flüssigkeitsdurchgangs in der Leitung (14), die zwischen einer Flüssigkeitsdurchlassstellung und einer Verschlussstellung des Flüssigkeitsdurchgangs in der Leitung (14) betätigbar ist, wobei die Verschlussstellung in der Absperrvorrichtung (16₁; 16₂) einen toten Raum bildet, wobei eine Wand der Absperrvorrichtung (16₁; 16₂) ein Durchgangsloch (34) umfasst, und wobei die Absperrvorrichtung (16₁; 16₂) ein erstes drehbares Kugelküken (16₁) das einen ersten toten Raum definiert, und ein zweites drehbares Kugelküken (16₂) vom schwimmenden oder verzweigten Typ umfasst, der zwischen einer Verschlussstellung des Flüssigkeitsdurchgangs in der Leitung (14) und einer Flüssigkeitsdurchlassstellung in der Leitung (14) betätigbar ist, wobei das zweite drehbare Kugelküken (16₂) einen zweiten toten Raum in Verschlussstellung des Flüssigkeitsdurchgangs in der Leitung (14) definiert ist, und wobei ein dritter toter Raum zwischen den beiden drehbaren Kugelküken (16₁; 16₂) definiert ist,
**dadurch gekennzeichnet, dass** eine Druckentlastungsvorrichtung des toten Raums im Durchgangsloch der Absperrvorrichtung angeordnet ist, und die Druckentlastungsvorrichtung (36) in der Wand des ersten drehbaren Kugelkükens (16₁) angeordnet ist um die Druckentlastung des dritten toten Raums im ersten toten Raum zu ermöglichen.

2. Absperrventil mit einem toten Raum nach Anspruch 1, wobei die Druckentlastungsvorrichtung aus einem geeichten Ventil (36) gebildet ist.

3. Absperrventil mit einem toten Raum nach Anspruch 2, wobei das geeichte Ventil (36) in die Wand der Absperrvorrichtung (16₁; 16₂) eingeschraubt, gedübelt oder eingepresst ist.

4. Absperrventil mit einem toten Raum nach einem der Ansprüche 1 bis 3, wobei das Durchgangsloch (34) zwischen dem toten Raum und der Flüssigkeitsdurchlassleitung (14) dem gebildet ist.

5. Absperrventil mit einem toten Raum nach Anspruch 4, wobei das Durchgangsloch (34) in der Wand der Absperrvorrichtung (16₁; 16₂) gebildet ist, die dazu bestimmt ist zum zweiten drehbaren Kugelküken (162) hin, in Verschlussstellung des Flüssigkeitsdurchgangs in der Leitung (14) angebracht zu werden.

6. Absperrventil mit einem toten Raum nach einem der vorangehenden Ansprüche, wobei die beiden drehbaren Kugelküken (16₁; 16₂) stromaufwärtigen Sitzen vom Typ einfachwirkender Kolben zugeordnet sind, wobei das erste drehbare Kugelküken (16₁) einem stromabwärtigen Sitz vom Typ einfachwirkender Kolben und das zweite drehbare Kugelküken (16₂) einem stromabwärtigen Sitz vom Typ doppeltwirkender Kolben zugeordnet sind.

7. Anlage zum Transportieren von Kohlenwasserstoffen (150) die mindestens zwei Rohre (152; 154) und ein Absperrventil mit einem toten Raum nach einem der vorangehenden Ansprüche umfasst, wobei die Rohre durch das Absperrventil mit einem toten Raum miteinander verbunden sind.

## Claims

1. An isolation valve with a dead chamber, including:
- a body (12) with a fluid-passing conduit (14),
- a device (16₁; 16₂) for obturating the fluid passage in the conduit (14), which may be actuated between a fluid-passing position and a position for obturating the fluid passage in the conduit (14), an obturation position in which the obturation device (16₁; 16₂) forms a dead chamber, a wall of the obturation device (16₁; 16₂) comprising a through-hole (34),
wherein the obturation device (16₁; 16₂) includes a first rotating body with aspherical rotating plug (16₁) defining a first dead chamber, and a second rotating body with a spherical plug (16₂), of the floating or trunnion ball type, which may be actuated between a position for obturating the fluid passage in the conduit (14) and a fluid-passing position in the conduit (14), the second rotating body with a spherical plug (16₂) defining a second dead chamber in a position for obturating the fluid passage in the conduit (14), a third dead chamber being defined between the two rotating bodies with spherical plugs (16₁; 16₂),
**characterized in that** a decompression device is positioned in the through-hole of the obturation device, and **in that** the decompression device (36) is positioned in the wall of the first rotating body with a spherical plug (16₁) for allowing decompression of the third dead chamber in the first dead chamber.

2. The isolation valve with a dead chamber according to claim 1, wherein the decompression device is formed by a calibrated valve (36).

3. The isolation valve with a dead chamber according to claim 2, wherein the calibrated valve (36) is screwed, pinned or forcibly inserted into the wall of the obturation device (16₁; 16₂).

4. The isolation valve with a dead chamber according to one of claims 1 to 3, wherein the through-hole (34) is made between the dead chamber and the fluid-passing conduit (14).

5. The isolation valve with a dead chamber according to claim 4, wherein the through-hole (34) is made in the wall of the obturation device (16₁; 16₂) intended to be positioned towards the second rotating body with a spherical plug (16₂), in a position for obturating the fluid passage in the conduit (14).

6. The isolation valve with a dead chamber according to one of the preceding claims, wherein both rotating bodies with spherical plugs (16₁; 16₂) are associated with upstream seats of the type with a simple piston effect, the first rotating body with a spherical plug (16₁) being associated with a downstream seat of the type with simple piston effect and the second rotating body with a spherical plug (16₂) being associated with a downstream seat of the type with a double piston effect.

7. A hydrocarbon transport facility (150) including at least two pipes (152; 154) and an isolation valve with a dead chamber according to any of the preceding claims, wherein the pipes are connected through the isolation valve with a dead chamber.
